(19) Europäisches Patentamt
European Patent Office
Office européen des brevets

(11) EP 2 450 386 B1

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(51) Int Cl.:
***C08G 18/10*** (2006.01) ***C08G 18/28*** (2006.01)
***C08G 18/30*** (2006.01) ***C08G 18/72*** (2006.01)
***C09J 175/04*** (2006.01)

(21) Anmeldenummer: **11401623.1**

(22) Anmeldetag: **27.10.2011**

(54) **Harz für Kleb- und Beschichtungsstoffe auf Basis silanterminierter Harze mit mindestens zwei Edukten**

Resin for adhesive and coating materials on the basis of silane-terminated resins with at least two educts

Résine pour matières de collage et de revêtement à base de résines terminées par du silane et préparées à partir d'au moins deux matériaux de départ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2010 DE 102010060443**

(43) Veröffentlichungstag der Anmeldung:
**09.05.2012 Patentblatt 2012/19**

(73) Patentinhaber: **fischerwerke GmbH & Co. KG**
**72178 Waldachtal (DE)**

(72) Erfinder:
- **Grün, Jürgen**
  **79268 Bötzingen (DE)**
- **Herbstritt, Yvonne**
  **79183 Waldkirch (DE)**
- **Schlenk, Christian, Dr.**
  **79211 Denzlingen (DE)**
- **Vogel, Martin, Dr.**
  **79286 Glottertal (DE)**

(56) Entgegenhaltungen:
**EP-A1- 0 872 499** **EP-A1- 0 913 402**
**EP-A1- 1 674 546** **WO-A1-2009/144280**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 450 386 B1

## Beschreibung

Die Erfindung betrifft silanterminierte Harze für Kleb- oder Beschichtungsstoffe auf deren Basis, insbesondere für Konstruktionszwecke, wie in Anspruch 1 und den abhängigen Ansprüchen definiert, sowie jeweils deren Verwendungen gemäß den Ansprüchen; für Referenzzwecke beschreibt die Offenbarung auch Herstellungsverfahren dafür. Die silanterminierten Harze weisen einen nur geringen oder gar keinen Gehalt an freien Isocyanatgruppen auf, wobei in besonderen Ausführungsformen der Erfindungsgegenstände bereits die Edukte einen nur geringen oder gar keinen Gehalt an Monomeren mit freien Isocyanatgruppen ausweisen.

Die Ansprüche gelten auch als Bestandteil der Beschreibung der Erfindung.

Klebstoffe, die DIN EN 204-D4 erfüllen, enthalten in der Regel gesundheitsschädliche Isocyanate und sind daher nach den geltenden Vorschriften zu kennzeichnen. Mitunter führt diese Kennzeichnung zu Vermarktungsbeschränkungen.

Aufgabe der vorliegenden Erfindung ist vor diesem Hintergrund, Harze für Kleb- oder Beschichtungsstoffe zu finden, welche günstige toxikologische bzw. arbeitshygienische Eigenschaften haben und insbesondere auch hohe Adhäsion zu vielen Substraten und eine hohe Witterungsbeständigkeit aufweisen und beispielsweise fähig sind, auch die Beanspruchungsgruppe D4 nach DIN EN 204 zu erfüllen.

Die Norm stellt ein Klassifizierungssystem für thermoplastische Holzklebstoffe für nichttragende Anwendungen auf. Die Klassifizierung in die Beanspruchungsgruppen D1 bis D4 erfolgt auf der Grundlage von Messungen der Festigkeit von Klebstofffugen im nassen und trockenen Zustand unter festgelegten Bedingungen im Anschluss an unterschiedliche Lagerungsfolgen.

DIN EN 204 unterscheidet folgende Beanspruchungsgruppen:

D1 - Innenbereich, maximale Holzfeuchte 15 %.

D2 - Innenbereich mit gelegentlicher kurzzeitiger Einwirkung von abfließendem Wasser oder Kondenswasser und/oder gelegentlicher hoher Luftfeuchte mit einem Anstieg der Holzfeuchte bis 18 %.

D3 - Innenbereich mit häufiger kurzzeitiger Einwirkung von abfließendem Wasser oder Kondenswasser und/oder Einwirkung hoher Luftfeuchte. Außenbereich, vor der Witterung geschützt.

D4 - Innenbereich mit häufiger langanhaltender Einwirkung von abfließendem Wasser oder Kondenswasser. Außenbereich, der Witterung ausgesetzt, jedoch mit angemessenem Oberflächenschutz.

Für die Klassifizierung in die verschiedenen Beanspruchungsgruppen sind nachstehende Lagerungsfolgen und die zu erreichenden Klebfestigkeiten definiert.
Insgesamt werden 5 Lagerungsfolgen beschrieben.

Lagerungsfolge 1: 7 Tage im Normalklima;
Lagerungsfolge 2: 7 Tage im Normalklima, 3 h in Wasser bei (20 ± 5) °C, 7 Tage im Normklima;
Lagerungsfolge 3: 7 Tage im Normalklima, 4 Tage in Wasser bei (20 ± 5) °C;
Lagerungsfolge 4: 7 Tage im Normalklima, 4 Tage in Wasser bei (20 ± 5) °C, 7 Tage im Normalklima;
Lagerungsfolge 5: 7 Tage im Normalklima, 6 h in kochendem Wasser, 2 h in Wasser bei (20 ± 5) °C;

Die Beanspruchungsgruppen sind wie folgt definiert. Zur Erlangung der Beanspruchungsgruppe D1 muss in Lagerungsfolge 1 ein Wert von ≥ 10 N/mm$^2$ erreicht werden. Die restlichen Beanspruchungsgruppen D2, D3 und D4 verlangen ebenfalls einen Wert von ≥ 10 N/mm$^2$ in der Lagerungsfolge 1. Für D2 muss außerdem in Lagerungsfolge 2 mindestens ein Wert von 8 N/mm$^2$ erreicht werden. Die Beanspruchungsgruppe D3 verlangt in Lagerungsfolge 3 eine Zugscherfestigkeit von ≥ 2 N/mm$^2$ und in Lagerungsfolge 4 ein Wert von ≥ 8 N/mm$^2$. Bei D4 müssen die Werte nach den Lagerungsfolgen 3 und 5 jeweils ≥ 4 N/mm$^2$ sein.

Klebstoffe werden nach Norm DIN EN 205 durch Verklebung mit dünnen Klebstofffugen getestet. Das Ergebnis wird als Mittelwert aus 10 Einzelmessungen bestimmt.

Die DE 10 2008 021 221 umfasst theoretisch auch die Reaktion von Isocyanaten mit Silanen, jedoch geht es um ein anderes Ziel: Gute Elastizität und Dehnbarkeit soll erreicht werden, und die Anmeldung ist auf Isocyanatosilane und Polyoxyalkylenglykole als bevorzugte Materialien ausgerichtet.

DE 10 2004 022 150 beschreibt 2-komponentige Massen mit Silanen in beiden Komponenten, wobei konkret nur die Reaktion von Polyethern mit endständigen OH-Gruppen beschrieben wird, auch hier stehen hohe Elastizität und Kitte im Vordergrund.

Die DE 60 2004 012 439 T2 beschreibt in erster Linie Polyoxyethylen-Hydroxide, auch hier geht es wieder um hohe Elastizität und eher Kitte.

Die US 2009/0053411 beschreibt obligatorisch tensidhaltige Zusammensetzungen und hat als Ziel, die Lagerfähigkeit von Organoalkoxysilanen für Adhesionspromotoren zu erhöhen. Es geht um Zusammensetzungen zum Vorimprägnieren von Oberflächen. Die Verwendung als hochfeste Kleb- oder Beschichtungsstoffe ist nicht beschrieben. Es werden nur Epoxidderivate, keine Isocyanat-Derivate, exemplifiziert.

Die EP 2 014 692 (in Vergleichsbeispiel 3) und die darin zitierte WO 03/054049 zeigen Haftvermittler als Zusätze für Kleb- und Dichtstoffe - diese können aus Isocyanuraten und Trialkoxysilylalkylaminen hergestellt werden.

Die DE 10 2007 013 262 nennt Beschichtungsmittel auf Basis von HDI-Isocyanurat und N,N-Bis(trimethoxysilylpropan-1-yl)amin. WO 2008/043722 nennt neben Silangruppen radikalisch polymerisierbare Doppelbindungen beinhaltende allophanathaltige Polyurethane.

Alkoxysilane mit Aminogruppen werden in einer Reihe von in der EP 0 913 402 genannten Dokumenten beschrieben. Es wird jedoch erwähnt, dass es bekannt ist, dass alle aminofunktionalen Silane extrem reaktiv mit Isocyanaten sind. Daher wird es als schwierig beschrieben, diese Alkoxysilane mit Polyisocyanaten umzusetzen wegen der Inkompatibilität, Inhomogenität und extrem hoher Viskositäten der Reaktionsprodukte.

Es wurde nun jedoch überraschend gefunden, dass die genannten Nachteile bei Durchführung der Umsetzung mit Rohstoffen nach a) und b) wie unten erklärt und in den Ansprüchen und nachfolgend als erfindungsgemäß definiert nicht bestätigt werden können und sogar Kleb- oder Beschichtungsstoffe mit ausgezeichneten Eigenschaften resultieren.

Bei für Referenzzwecke beschriebenen silanterminierten Harzen handelt es sich um solche, die bei der Umsetzung von

a) Silanen, die als Substituenten mindestens einen hydrolysierbaren Rest, insbesondere Alkoxyrest, und mindestens einen Substituenten mit einer gegenüber Isocyanaten reaktiven (funktionalen) Gruppe, ausgewählt aus $-NH_2$ (Amino), -NH- (sek. Amino),-SH (Mercapto), Epoxy, Isocyanato, gamma-Ureido, O-Alkyl-carbamato und/oder Anhydrido aufweisen;

und mindestens zwei weiteren Komponenten b) ausgewählt aus

b1) aliphatischen (bevorzugt), aromatischen oder araliphatischen Polyisocyanaten mit durch Reaktion von Isocyanatgruppen miteinander gebildeten cyclischen Uretdion-Typ-, Isocyanurat-Typ-, Iminooxadiazinon-Typ-, Uretonimin-Typ- oder Oxadiazintrion-Typ-Strukturen, einer Viskosität von höchstens 15000 mPa·s, besonders bevorzugt von höchstens 5000 mPa·s (jeweils bei 23 °C), in einer besonderen Ausführungsform der Erfindungsgegenstände mit einem Gehalt an freien monomeren Isocyanaten von 2 oder weniger Gewichtsprozent, vorzugsweise von 0,5 oder weniger Gewichtsprozent, stärker bevorzugt von 0,1 Gewichtsprozent oder niedriger;

b2) aliphatischen (bevorzugt), aromatischen oder araliphatischen Polyisocyanaten mit Biuret-, Allophanat- oder Carbodiimid-Typ-Strukturen, einer Viskosität von höchstens 15000 mPa·s, besonders bevorzugt von höchstens 5000 mPa·s bei 23 °C, in einer besonderen Ausführungsform der Erfindungsgegenstände einem Gehalt an freien monomeren Isocyanaten von 2 oder weniger Gewichtsprozent, vorzugsweise von 0,5 oder weniger Gewichtsprozent, stärker bevorzugt von 0,1 Gewichtsprozent oder niedriger; und

b3) Präpolymeren mit einer Viskosität von 60’000 mPa·s oder weniger, bevorzugt von 15’000 oder weniger mPa·s, herstellbar aus der Reaktion von b1) und/oder b2) mit Verbindungen mit mindestens 2 gegenüber Isocyanaten reaktiven Gruppen

erhältlich (oder im engeren Sinne zu erhalten) sind.

Überraschend weisen silanterminierte Harze (und auf deren Basis formulierte Kleb- und Beschichtungsmittel) mit mindestens zwei Komponenten b) als Edukten besonders gute Eigenschaften gegenüber solchen mit nur einer Komponente b) als Edukt auf und sind beispielsweise geeignet, bei der Verwendung in Klebstoffen den Anforderungen bei Wasseranlagerung nach DIN EN 204, Beanspruchungsgruppe D4, zu genügen, wie oben beschrieben.

Bei Verklebungen von Buche können weiter nach Lagerfolge 1 Zugfestigkeiten von > 10 MPa (typischerweise im Bereich 12-20 MPa), nach Lagerfolge 3 und 5 Zugfestigkeiten von > 4 MPa (typischerweise im Bereich 4-7 MPa) erhalten werden.

Vorteilhaft weisen die silanterminierten Harze und bevorzugt auch bereits die Edukte b1)-b3) eine Molekulargewichtsverteilung derart auf, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten zusammengesetzt sind, d.h. im Sinne der Polymerdefinition nach REACH gemäß VERORDNUNG (EG) Nr. 1907/2006.

In weiteren besonderen Ausführungsformen der Erfindungsgegenstände weisen die erfindungsgemäßen silanterminierten Harze einen Gehalt an freien Isocyanatgruppen von 10 Gew.-% oder weniger, von 5 Gew.-% oder weniger, von 1 Gew.-% oder weniger, von 0,5 Gew.-% oder weniger, oder insbesondere von 0,1 Gew.-% oder weniger, auf.

In einer weiteren besonderen Ausführungsform der Erfindung sind die erfindungsgemäßen silanterminierten Harze frei von Isocyanatgruppen, beispielsweise frei von durch IR-Spektroskopie nachweisbaren Isocyanatgruppen.

Die entstehenden polaren (beispielsweise Polyurethan-, Polythiourethan-, Polyharnstoff- und/oder Polythioharnstoff-) Verbindungen sind besonders durch Kettenstabilität, gute Haftung auf polaren Substraten, hohe Festigkeit und geringe Dehnung nach dem Aushärten) gekennzeichnet und ermöglichen somit Verbindungen hoher Stabilität und Festigkeit. Die Bruchdehnungnach dem Aushärten liegt vorteilhaft bei kleiner oder gleich 110 %, z.B. kleiner als oder gleich 100 %, wie z.B. kleiner als oder gleich 80%, kleiner als oder gleich 50%, kleiner als oder gleich 40%, kleiner als oder gleich 30%, kleiner als oder gleich 25%, kleiner als oder gleich 20 %, kleiner als oder gleich 15%, oder kleiner als oder gleich 10%, bestimmt nach DIN EN ISO 527, Probenkörpertyp Schulterstab Typ 1BA.

Die Offenbarung beschreibt für Referenzzwecke auch die Verwendung der erfindungsgemäßen silanterminierten Harze zur Formulierung von Klebstoffen zum Verkleben insbesondere im Konstruktions- und Baubereich zur (mindestens) stoffschlüssigen Verbindung von zwei oder mehr in Kontakt bringbaren Flächen eines Teils und/oder von zwei oder mehr Teilen zu einem aus den verbundenen Teilen bestehenden Objekt, bzw. diese Harze beinhaltende Klebstoffe.

Die Offenbarung beschreibt für Referenzzwecke auch die Verwendung der erfindungsgemäßen silanterminierten Harze zur Formulierung von Beschichtungsstoffen, bzw. diese Harze beinhaltende Beschichtungsstoffe als solche, jeweils zur Beschichtung von Substraten, metallischen, organischen oder mineralischen Substraten, insbesondere Substraten im Baubereich, wie Metallen, Mauerwerk, Beton, Keramik, Holz, Kunststoff oder dergleichen. Ferner kann die Verwendung zur Verklebung oder Beschichtung im Bereich der Herstellung von Land-, Wasser- oder Luftfahrzeugen, im Bereich des Sanitärwesens, im Bereich der Elektroindustrie, im Bereich der Herstellung von Produkten mit Kunststoffteilen, und/oder in der Möbelindustrie stattfinden.

Die Offenbarung beschreibt für Referenzzwecke in einer weiteren Ausführungsform auch ein Verfahren oder eine Methode zur Herstellung der silanterminierten Harze für Kleb- oder Beschichtungsstoffe, welche durch Umsetzung von

a) Silanen, die als Substituenten mindestens einen hydrolysierbaren Rest, insbesondere Alkoxyrest, und mindestens einen Substituenten mit einer gegenüber Isocyanaten reaktiven (funktionalen) Gruppe, ausgewählt aus $-NH_2$ (Amino), -NH- (sek. Amino) - SH (Mercapto), Epoxy, Isocyanato, gamma-Ureido, O-Alkyl-carbamato und/oder Anhydrido aufweisen;

und mindestens zwei weiteren Komponenten b) ausgewählt aus

b1) aliphatischen (bevorzugt), aromatischen oder araliphatischen Polyisocyanaten mit durch Reaktion von Isocyanatgruppen miteinander gebildeten cyklischen Uretdion-Typ-, Isocyanurat-Typ-, Iminooxadiazinon-Typ-, Uretonimin-Typ- oder Oxadiazintrion-Typ-Strukturen , einer Viskosität von höchstens 15000 mPa·s, besonders bevorzugt von höchstens 5000 mPa·s (jeweils bei 23 °C), in einer besonderen Ausführungsform der Erfindungsgegenstände mit einem Gehalt an freien monomeren Isocyanaten von 2 oder weniger Gewichtsprozent, vorzugsweise von 0,5 oder weniger Gewichtsprozent, stärker bevorzugt von 0,1 Gewichtsprozent oder niedriger;
b2) aliphatischen (bevorzugt), aromatischen oder araliphatischen Polyisocyanaten mit Biuret-, Allophanat- oder Carbodiimid-Typ-Strukturen, einer Viskosität von höchstens 15000 mPa·s, besonders bevorzugt von höchstens 5000 mPa·s bei 23 °C, in einer besonderen Ausführungsform der Erfindungsgegenstände mit einem Gehalt an freien monomeren Isocyanaten von 2 oder weniger Gewichtsprozent, vorzugsweise von 0,5 oder weniger Gewichtsprozent, stärker bevorzugt von 0,1 Gewichtsprozent oder niedriger; und
b3) Präpolymeren mit einer Viskosität von 60'000 mPa·s oder weniger, bevorzugt von 15'000 oder weniger mPa·s, herstellbar aus der Reaktion von b1) und/oder b2) mit

Verbindungen mit mindestens 2 gegenüber Isocyanaten reaktiven Gruppen; gekennzeichnet ist.

Die nachfolgenden Definitionen allgemeiner Begriffe ermöglichen die Ersetzung eines oder mehrerer der Begriffe durch die spezifischen Definitionen, was soweit unter die Ansprüche fallend zu bevorzugten Ausführungsformen der Erfindung (auch aus den hier durch Bezugnahme aufgenommenen Ansprüchen) führt.

"Mindestens zwei" bedeutet zwei oder mehr als zwei, in einer Ausführungsform der Erfindungsgegenstände "zwei bis sechs", in einer weiteren "zwei bis fünf", in einer weiteren "zwei bis vier", in einer weiteren "zwei bis drei", in einer weiteren "zwei".

Die Komponenten b) werden in Bezug auf die Summe aller Komponenten b) in einer Ausführungsform der Erfindungsgegenstände in einem Gewichtsanteil von jeweils 1 bis 99 Gew.-%, insbesondere von 10 bis 90, beispielsweise von 20 bis 80, wie von 30 bis 70 Gew.-% vorliegen. Im bevorzugten Falle von zwei Komponenten b) liegt deren Gewichtsverhältnis vorzugsweise bei 1 : 99 bis 99 : 1, bei 10 : 90 bis 90 : 10 oder bei 75 : 25 bis 25 : 75.

Die erfindungsgemäße silanterminierte Harze beinhaltenden erfindungsgemäßen bzw. erfindungsgemäß verwendeten bzw. (für Referenzzwecke) hergestellten Kleb- oder Beschichtungsstoffe sind in anderen Ausführungsformen der Erfindungsgegenstände (was stets Produkte, Verwendung der Ausführungsformen aus den Ansprüchen, die in der Beschreibung durch Bezugnahme aufgenommen werden) beinhaltet) *entweder* Klebstoffe *oder* Beschichtungsstoffe.

Die erfindungsgemäßen silanterminierten Harze bzw. die diese enthaltenden erfindungsgemäßen bzw. erfindungsgemäß verwendeten bzw. erfindungsgemäß hergestellten Kleb- oder Bschichtungsstoffe sind frei von anders als durch die Hydrolyse der mindestens einen hydrolysierbaren Rest aufweisenden Silane härtbaren Gruppen, wie olefinischen (z.B. radikalisch) härtbaren Gruppen, das heißt, vorzugsweise haben alle silanterminierten Harze und diese beinhaltende Kleb- oder Beschichtungsstoffe als härtbare Gruppen nur mindestens einen hydrolysierbaren Alkoxy-Rest (vorzugsweise ein bis drei, insbesondere 1 oder zwei davon) aufweisende Silylreste.

Die erfindungsgemäßen silanterminierten Harze bzw. die diese beinhaltenden erfindungsgemäßen Kleb- oder Beschichtungsstoffe bzw. erfindungsgemäß verwendeten bzw. offenbarungsgemäß hergestellten Kleb- oder Beschichtungsstoffe sind in anderen Ausführungsformen der Erfindungsgegenstände dadurch gekennzeichnet, dass die Konzentration an hydrolysierbaren Resten (O-Alkyl), wie unten definiert im Bereich von 1 bis 20 mol/l, insbesondere von 2 bis 10 mol/l, eingestellt ist (Ermittlung rechnerisch aus den Edukten und der Formulierung).

Die erfindungsgemäßen silanterminierten Harze bzw. die diese beinhaltenden Kleb- oder Beschichtungsstoffe bzw. erfindungsgemäß verwendeten bzw. offenbarungsgemäß hergestellten Kleb- oder Beschichtungsstoffe sind in anderen Ausführungsformen der Erfindungsgegenstände dadurch gekennzeichnet, dass die mittlere massengewichtete Funktionalität

$$f = \frac{\sum_i m_i * f_i}{m_{ges.}}$$

mit $m_i$=Masse der Komponente i und $f_i$ = Funktionalität der Komponente i bei 10 oder weniger, vorzugsweise bei 5 oder weniger liegt.

Die erfindungsgemäßen silanterminierten Harze bzw. die diese beinhaltenden erfindungsgemäßen Kleb- oder Beschichtungsstoffe bzw. erfindungsgemäß verwendeten bzw. offenbarungsgemäß hergestellten Kleb- oder Beschichtungsstoffe sind in anderen Ausführungsformen der Erfindungsgegenstände dadurch gekennzeichnet, dass sie eine Konzentration an hydrolysierbaren Resten O-Alkyl wie unten definiert im Bereich von 1 bis 20 mol/l, insbesondere von 2 bis 10 mol/l, aufweisen und die mittlere massengewichtete Funktionalität bei 10 oder weniger, vorzugsweise 5 oder weniger, liegt.

Vorzugsweise kann in den im letzten Absatz genannten Harzen bzw. den diese beinhaltenden Kleb- und Beschichtungsstoffen c(D) bei 10 (insbesondere 5) mol/l oder weniger, c(T) bei 10 (insbesondere 5) mol/l oder weniger und c(Q) bei 10 (insbesondere 5) mol/l oder weniger liegen, wobei c(D) die Konzentration von hydrolysierbaren Resten an Silylgruppen mit zwei hydrolysierbaren Resten, c(T) die Konzentration von hydrolysierbaren Resten an Silylgruppen mit drei hydrolysierbaren Resten und c(Q) die Konzentration von hydrolysierbaren Resten an Silylgruppen mit vier hydrolysierbaren Resten angibt.

Die erfindungsgemäßen silanterminierten Harze bzw. diese beinhaltenden Kleb- oder Beschichtungsstoffe bzw. erfindungsgemäß verwendeten bzw. erfindungsgemäß hergestellten Kleb- oder Beschichtungsstoffe sind in anderen Ausführungsformen der Erfindungsgegenstände vorteilhaft zinnfrei und/oder tensidfrei.

In allen vor- und nachstehenden Ausführungsformen der Erfindungsgegenstände können die Konzentrationen beispielsweise an Gruppen $Si(R_2)_q$ etc. z.B. durch Lösungsmittel eingestellt werden, wie Alkohole, beispielsweise Alkanole, wie Ethanol, Propanol, Isopropanol oder Butanol. In allen vor- und nachstehenden Ausführungsformen der Erfindungsgegenstände können die Konzentrationen an unter die Ansprüche fallenden Gruppen $Si(R_2)_q$ und mittleren Funktionalitäten f beispielsweise durch teilweise Reaktion von NCO-Gruppen mit nichthydrolysierbaren NCO-reaktiven Verbindungen wie z.B. Alkoholen, Aminen und/oder Mecaptanen, eingestellt werden. Entsprechende Kleb- und Beschichtungsstoffe, deren Herstellung und Verwendung beispielsweise mit einem Gehalt an Lösungsmittel im Bereich von 0,1 bis 50 Gew.-%, wie von 2 bis 25 Gew.-% oder von 5-10 %, sind ebenfalls Ausführungsformen der Erfindungsgegenstände.

Unter den, soweit nicht unter die Ansprüche fallenden, nur für Referenzzwecke offenbarten Silanen, die als Substituenten mindestens einen hydrolysierbaren Rest und mindestens einen Substituenten mit einer gegenüber Isocyanaten reaktiven Gruppe, ausgewählt aus - $NH_2$ (Amino), -NH- (sek. Amino), -SH (Mercapto), Epoxy, -NCO (Isocyanato) oder Anhydrido aufweisen, sind alle entsprechenden Silane zu verstehen, die derartige hydrolysierbare Reste, worunter vor- und nachstehend beispielsweise Halogenatome (wie Chloro), Ketoximato, Amino, Aminoxy, Mercapto, Acyloxy, Aryloxy, Aralkyloxy (= Arylalkoxy) oder insbesondere Alkyloxy (Alkoxy) zu verstehen sind, aufweisen, beispielsweise mindestens einen hydrolysierbaren Alkoxyrest und mindestens eine Amino-, sek. Amino-, Mercapto-, Epoxy-, Isocyanato- und/oder Anhydrido-Gruppe-Gruppe tragen, beispielsweise Silane der Formel I,

$$[R_1\text{-}X\text{-}(CH_2)_n\text{-}]_p\text{-}Si(\text{-}R_2)_q \qquad (I)$$

worin

X für S oder NH oder O oder NCO oder nichts steht; wobei X nichts ist, wenn $R_1$ für Carbonsäureanhydrid steht;
$R_1$ fürnichts, Wasserstoff, Cycloalkyl, Alkyl, Aminoalkyl,Epoxyalkyl, Aryl, Acyl,Carbonsäureanhydrid, Heterocyclyl

oder einen Rest der Formel $-[(CH_2)_{n*}]_{p*}-Si(OR_2{}^*)_{q*}$ steht, worin, jeweils unabhängig vom anderen Rest, $R_2{}^*$ eine der für $R_2$, genannten Bedeutungen hat; wobei $R_1$ Wasserstoff ist, wenn X für S steht; wobei $R_1$ Epoxyalkyl ist, wenn X für O steht; wobei $R_1$ nichts ist, wenn X für NCO steht;

$R_2$ für Alkyl, Cycloalkyl oder für einen hydrolysierbaren Rest, insbesondere Alkoxy, steht, mit der Maßgabe, dass mindestens ein bis drei, insbesondere ein bis zwei (da eine Anzahl von weniger als drei zu besserer Wasserbeständigkeit führen kann), der Reste $R_2$ für (unabhängig voneinander auswählbare oder identische) hydrolysierbare Reste, beispielsweise für Alkoxy steht, bzw. stehen;

n und n* unabhängig voneinander für eine positive ganze Zahl, insbesondere 1 bis 10, stehen;

p und p* unabhängig voneinander für 1 bis 3 stehen; und

q und q* unabhängig voneinander für 1 bis 3 stehen, mit der Maßgabe, dass die Summe aus p bzw p* und q bzw. q* gleich 4 ist.

Hierbei können solche Silane verwendet werden, die den alpha-Effekt zeigen, also z.B. worin n und gegebenenfalls n* in obiger Formel I gleich 1 ist (n = 1 und ggf. n* = 1 in Formel I), z.B. Bis(2-trimethoxysilylmethyl)amin, N-Cyclohexylaminomethyl-methyldiethoxysilan, N-Cyclohexylaminomethyl-trimethoxysilan, Phenylaminomethyl-trimethoxysilan oder Phenylaminomethyl-methyldimethoxysilan. Unter dem alpha-Effekt ist die Wechselwirkung zwischen Silicium und einer geminalen (z.B. über einen Kohlenstoff beispielsweise eine Methylengruppe gebundenen) Donorgruppe (Amino, sek-Amino oder Mercapto (Sulfanyl)) zu verstehen, der eine erhöhte Reaktivität der Silane und damit deren beschleunigte Härtung unterstützt.

Vorteilhaft ist jedoch insbesondere auch die Verwendung von Silanen ohne alpha-Effekt, also mit Donorgruppen in beta- oder höherer Stellung, z.B. (wobei b jeweils für eine ganze Zahl von 2 oder höher steht) von b-Aminoalkyl-cycloalkyl-dialkoxysilanen (erfindungegemäß) oder insbesondere b-Aminoalkyl-alkyl-dialkoxysilanen (erfindungsgemäß) oder ferner b-Aminoalkyl-trialkoxysilanen (erfindungsgemäß), wie erfindungsgemäß 3-Aminopropylmethyldimethoxysilan, 3-Aminopropyl-methyldiethoxysilan oder von N,N-Bis(b-alkyl-cycloalkyldialkoxysilyl)-aminen oder insbesondere N,N-Bis(b-alkyldialkoxysilyl)-aminen, wie N,N-Bis(3-propyl-methyldimethoxysilyl)amin oder von N,N-Bis(b-trialkoxysilylalkyl)aminen oder N,N-Bis(b-alkyldialkoxysilylalkyl)aminen, wie N,N-Bis(3-trimethoxysilylpropyl)amin.

Soweit nicht anders angegeben für Referenzzwecke können bei den Silanen, die als Substituenten mindestens einen hydrolysierbaren Rest und mindestens einen Substituenten mit einer gegenüber Isocyanaten reaktiven Gruppe aufweisen, solche bevorzugt sein, die mindestens auch eine andere als Amino- oder sek-Amino-gruppen als gegenüber Isocyanaten reaktive Gruppen enthalten, insbesondere solche, welche die genannten gegenüber Isocyanaten reaktiven Gruppen außer Amino- oder sekundären Aminogruppen enthalten, wie Mercapto (Sulfanyl) (erfindungsgemäß) oder ferner die anderen genannten. Diese Varianten gelten insbesondere für die Kleb- und Beschichtungsstoffe als solche oder deren Verwendung zum Kleben, zum Beschichten oder zum Kleben und Beschichten. Andere bevorzugte Varianten können als Silane, die als Substituenten mindestens einen hydrolysierbaren Rest und mindestens einen Substituenten mit einer gegenüber Isocyanaten reaktive Gruppe aufweisen, solche beinhalten, die mindestens auch eine andere Gruppe als Mercapto als gegenüber Isocyanaten reaktive Gruppen enthalten, insbesondere solche, welche die genannten gegenüber Isocyanaten reaktiven Gruppen außer Mercapto enthalten.

Bei den für Referenzzwecke offenbarten Herstellungsverfahren (und somit auch für die Definition der entsprechend erhältlichen erfindungsgemäßen Produkte) können jedoch allgemein alle genannten Silane, die als Substituenten mindestens einen hydrolysierbaren Rest und mindestens einen Substituenten in Form einer Amino- oder sek.-Amino- oder Mercaptogruppe tragen, verwendet werden, auch bei den erfindungsgemäßen Verwendungen.

Alkyl steht innerhalb dieser Offenbarung stets für insbesondere einen unverzweigten oder ein- oder mehrfach verzweigten Alkylrest mit beispielsweise 1 bis 20, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl oder tert-Butyl.

Cycloalkyl steht insbesondere für mono-, di- oder trizyklisches, vorzugsweise monozyklisches, Cycloalkyl mit 3 bis 20 Kohlenstoffatomen, vorzugsweise mit 3 bis 10 Kohlenstoffatomen, im Ring, insbesondere für Cyclopentyl oder Cyclohexyl.

Aminoalkyl steht vorzugsweise für Alkyl wie oben definiert, das durch Amino substituiert ist, z.B. für 2-Aminoethyl, 3-Aminopropyl oder dergleichen.

Epoxyalkyl steht vorzugsweise für Alkyl wie oben definiert, das durch eine Epoxygruppe unter Ringbildung substituiert ist, wie insbesondere(2,3-Epoxy-propan-1-yl).

Aryl steht für einen mono-, di- oder trizyklischen, vorzugsweise monozyklischen, ungesättigten cyclischen Kohlenwasserstoffrest, wie insbesondere für Phenyl oder Naphthyl, wobei Aryl unsubstituiert oder substituiert sein kann, beispielsweise durch ein oder mehrere, z.B. bis zu drei, $C_1$-$C_7$-Alkylreste.

Acyl steht für einen über die Carbonylgruppe gebundenen Rest einer organischen Carbonsäure, beispielsweise einen Alkanoylrest, wie $C_2$-$C_7$-Alkanoyl, oder insbesondere einen $C_1$-$C_7$-Alkoxycarbonylrest, wie Methoxycarbonyl (Me-O-C(=O)-)

Heterocyclyl bedeutet insbesondere einen mono- di- oder trizyklischen, insbesondere monozyklischen Rest mit 3 bis

20, vorzugsweise 3 bis 8 Ringatomen, von denen ein oder mehrere , insbesondere 2, als Heteroatome unabhängig voneinander ausgewählt aus N, O und S vorliegen, und kann durch ein oder mehrere Oxogruppen substituiert sein, insbesondere solche, die an Ringkohlenstoffatome gebunden sind, die über ein O-Heteroatom gebunden sind (was zu Anhydrido führt). Unter Heterocyclyl fällt somit insbesondere auch Anhydrido, bei dem es sich um einen cyclischen Rest handelt, der folgendes ringschließendes Brückenelement enthält: -C(=O)-O-C(=O)-. Der Ring beinhaltet also eine Carbonsäureanhydridgruppe. Ein mögliches bevorzugtes Beispiel ist 2,5-Dioxo-oxolan-3-yl, ein anderes die entsprechende ungesättigte Variante 2,5-Dioxo-oxol- -3-yl mit Doppelbindung zwischen den C-Atomen in Stellung 3 und 4 des Rings, ein weiteres ein in 3,4-Stellung benzoannelierter 2,5-Dioxolan-3-ylrest.

Unter Isocyanato oder Isocyanatgruppe ist -N=C=O zu verstehen.

Dass "X für nichts" steht oder X nichts ist oder dergleichen, bedeutet, dass der Rest "-X-" in der jeweiligen Formel für eine einfache Bindung steht. Dass $R_1$ nichts ist, bedeutet, dass der Rest $R_1$ fehlt.

Ketoximato bedeutet insbesondere einen (hier über die mit Sterchen * markierte Bindung an Si gebundenen) Rest der Formel

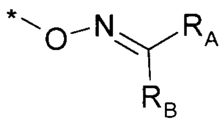

worin $R_A$ und $R_A$ unabhängig voneinander für Alkyl, insbesondere $C_1$-$C_7$-alkyl, stehen, welches verzweigt oder unverzweigt sein kann, wie z.B. Methyl, Ethyl oder Isobutyl.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Die Komponenten b) sind vorzugsweise wie folgt definierbar:
Aliphatisch (z.B. Alkyl) bedeutet, dass die entsprechenden Polyisocyanate gesättigte Kohlenwasserstoffketten mit 1 bis 20, vorzugsweise 1 bis 10, Kohlenstoffatomen, die geradkettig und/oder verzweigtkettig sein können, wie Hexamethylen , oder gesättigte cyclische Reste, die mit ein oder mehreren ggf. weiter substituierten Alkylgruppen substituiert sein können, wie Isophoronylen (1,1,3,3-tetramethylcyclohexanylen) oder Dicyclohexylmethylen, beinhalten. Diese tragen die durch Reaktion von Isocyanatgruppen miteinander gebildeten ein oder mehreren cyklischen Strukturen des Uretdion-Typs, des Isocyanurat-Typs, des Iminooxadiazinon-Typs oder des Uretonimin-Typs oder ferner des Oxadiazintriontyps, oder nichtzyklische Gruppen des Biurettyps, des Allophanattyps oder ferner des Carbodiimidtyps; oder zwei oder mehr unterschiedliche derartige Gruppen, und ein oder vorzugsweise mehrere noch verbleibende nicht umgesetzte Isocyanatgruppen.

Aromatisch (z.B. Aryl) bedeutet, dass die entsprechenden Polyisocyanate aromatische Reste mit 6 bis 18 Kohlenstoffatomen beinhalten, wie Phenylen, Naphthylen, die mit ein oder mehreren, gegebenenfalls auch verbrückenden Alkylsubstituenten, wie ein oder mehreren Methylgruppen, substituiert sein können, z. B. Toluylen oder Methyldiphenylen. Diese tragen die durch Reaktion von Isocyanatgruppen miteinander gebildeten cyklischen Strukturen, des Uretdion-Typs, des Isocyanurat-Typs, des Uretonimin-Typs oder des Iminooxadiazinontyps oder ferner des Oxadiazintriontyps, oder nichtzyklische Gruppen des Biurettyps, des Allophanattyps oder ferner des Carbodiimidtyps, oder zwei oder mehr unterschiedliche derartige Gruppen, und ein oder vorzugsweise mehrere noch verbleibende nicht umgesetzte Isocyanatgruppen.

Aromatisch-aliphatisch (z.B. Aralkyl; weniger bevorzugt als Bedeutung) bedeutet, dass die entsprechenden Reste Kombinationen aus aliphatischen Resten und aromatischen Resten, wie vorstehend genannt, beinhalten. Diese tragen die durch Reaktion von Isocyanatgruppen miteinander gebildeten cyklischen Strukturen des Uretdion-Typs, des Isocyanurat-Typs, des Uretonimin-Typs oder des Iminooxadiazinontyps, oder ferner des Oxadiazintriontyps, oder nichtzyklische Gruppen des Biurettyps, des Allophanattyps oder ferner des Carbodiimidtyps, oder zwei oder mehr unterschiedliche derartige Gruppen, und ein oder vorzugsweise mehrere noch verbleibende nicht umgesetzte Isocyanatgruppen.

Unter aliphatischen (bevorzugt), aromatischen oder araliphatischen Polyisocyanaten mit cyklischen Strukturen sind solche zu verstehen, die beispielsweise aus der Umsetzung von mindestens einem Teil der Isocyanatgruppen entsprechender Isocyanatgruppen tragender Monomere erhältliche zyklische Strukturen des Uretdion-Typs, des Isocyanurat-Typs, des Iminooxadiazindion-Typs und/oder des Uretonimin-Typs, und/oder ferner des Oxadiazintriontyps, beinhalten.

Uretdion-Typ-Strukturen beinhalten Gruppen (oder bestehen insbesondere aus Verbindungen) der Formel A

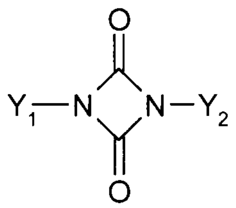

(A)

worin $Y_1$ und $Y_2$ unabhängig voneinander aus Alkyl, Aryl oder Alkylaryl ausgewählt sein können, wobei mindestens einer oder alle dieser Reste durch mindestens eine freie Isocyanatgruppe substituiert sind, wobei ein Teil der Isocyanatgruppen erneut Bestandteil von entsprechenden Uretdion-Typ- oder weiteren gegebenenfalls auch durch Nebenreaktionen entstehenden Strukturen sein können, also pro Molekül mehrere solcher Gruppen, beispielsweise bis zu zehn, vorkommen können, so dass insgesamt mindestens eine oder vorzugsweise zwei, oder mehr, freie Isocyanatgruppen je Molekül der Formel A verbleiben.

Isocyanurat-Typ-Strukturen beinhalten Strukturen des Typs (oder bestehen insbesondere aus Verbindungen) der Formel B

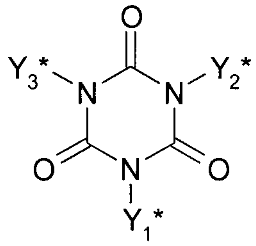

, (B)

worin $Y_1$*, $Y_2$* und $Y_3$* unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, also pro Molekül der Formel B mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel B verbleiben.

Isocyanurat-Typ-Strukturen können in einer Ausführungsform der Erfindungsgegenstände weggelassen sein, d.h., nur mindestens zwei der übrigen Strukturtypen können vorkommen.

Iminooxadiazindion-Typ-Strukturen beinhalten Strukturen des Typs (oder bestehen insbesondere aus Verbindungen) der Formel C

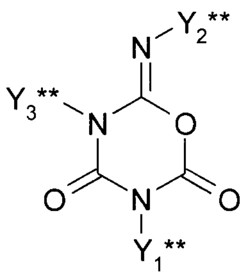

(C)

worin $Y_1$**, $Y_2$** und $Y_3$** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Iminooxadiazindion-Typ- oder weiteren gegebenenfalls auch durch Nebenreaktionen entstehenden Strukturen sein können, also pro Molekül der Formel C mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel C verbleiben.

Uretonimin-Typ-Strukturen beinhalten Strukturen des Typs (oder bestehen insbesondere aus Verbindungen) der Formel D

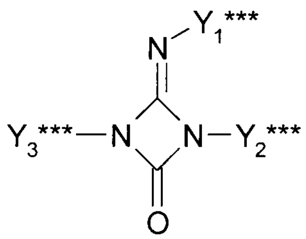

, (D)

worin $Y_1$***, $Y_2$*** und $Y_3$*** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, also pro Molekül der Formel D mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel D verbleiben.

Oxadiazintrion-Typ-Strukturen beinhalten Strukturen des Typs (oder bestehen insbesondere aus Verbindungen) der Formel G,

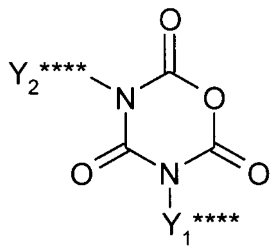

(G)

worin $Y_1$**** und $Y_2$**** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, also pro Molekül der Formel G mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel G verbleiben.

Aryl ist innerhalb dieser Offenbarung stets vorzugsweise ein aromatischer Rest mit 6 bis 18 Kohlenstoffatomen, beispielsweise Phenyl, Naphthyl, Toluyl oder Methyldiphenyl.

Aralkyl ist innerhalb dieser Offenbarung stets Aryl wie zuvor definiert, welches an Alkyl wie vorstehend definiert gebunden ist, beispielsweise Benzyl oder Phenylethyl, kann aber bei für Ausführungsformen der Erfindung innerhalb dieser Offenbarung weggelassen werden.

Viskositäten werden nach DIN EN ISO 2555 mit einem Brookfield DV-III+-Viskosimeter mit Spindel 3 bei 10 Umdrehungen/Minute (U/min) bei 23 °C gemessen und in Pa·s (nachfolgend auch als Pa∗s oder Pas wiedergegeben) angegeben.

Die Bestimmung des NCO-Gehaltes eines Isocyanates erfolgt durch Reaktion eines Überschusses an Dibutylamin mit dem Isocyanat, gefolgt von einer Rücktitration des überschüssigen Amins mit Chlorwasserstoffsäure (HCl), nach der Formel:

$$\%NCO = (42{,}02\ g/mol \cdot [\text{Äquivalente an } Bu_2NH \text{ verbraucht}]/[\text{Gewicht der Probe}]) \cdot 100$$

Beispielsweise kann diese Messung nach Siggia, S. and J. G. Hanna. 1948. Anal. Chem., 20:1084, oder nach der nicht verbindlich gewordenen Methode nach ASTM D4666-87, "Standard Test Method for Polyurethane Raw Materials: Determination of Amine Equivalent of Crude or Modified Isocyanates", durchgeführt werden.

Unter aliphatischen (bevorzugt), aromatischen oder araliphatischen Polyisocyanaten mit Biuret- oder Allophanat-Strukturen oder ferner Carbodiimid-Strukturen (acyclischen Strukturen) sind insbesondere solche zu verstehen, die beispielsweise aus der Umsetzung von mindestens einem Teil der Isocyanatgruppen erhältliche entsprechende acyclische Strukturen beinhalten.

Biuret-Typ-Strukturen beinhalten Strukturen des Typs (oder bestehen insbesondere aus Verbindungen) der

Formel E

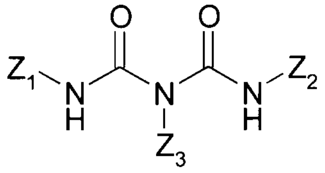

(E)

worin $Z_1$, $Z_2$ und $Z_3$ unabhängig voneinander aus Alkyl, Aryl oder Alkylaryl ausgewählt sein können, wobei mindestens einer oder vorzugsweise zwei oder alle dieser Reste durch mindestens eine Isocyanatgruppe substituiert sind, wobei Isocyanatgruppen erneut Bestandteil von entsprechenden Biuret-Typ- oder weiteren gegebenenfalls auch durch Nebenreaktionen entstehenden Strukturen sein können, also pro Molekül mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel E verbleiben.

Allophanat-Typ-Strukturen beinhalten Strukturen des Typs (oder bestehen insbesondere aus Verbindungen) der Formel F

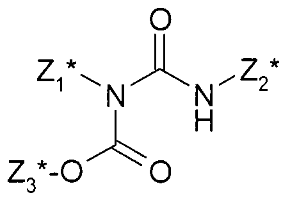

(F)

worin $Z_1$*, $Z_2$* und $Z_3$* unabhängig voneinander aus Alkyl, Aryl oder Alkylaryl ausgewählt sein können, wobei mindestens einer oder vorzugsweise zwei dieser Reste durch eine Isocyanatgruppe substituiert sind, wobei Isocyanatgruppen erneut Bestandteil von entsprechenden Allophanat-Typ- oder weiteren gegebenenfalls auch durch Nebenreaktionen entstehenden Strukturen sein können, also pro Molekül der Formel F mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel F verbleiben.

Carbodiimid-Typ-Strukturen beinhalten Strukturen des Typs (oder bestehen insbesondere aus Verbindungen) der Formel H

$$Z_1^{**}\text{-N=C=N-}Z_2^{**} \qquad \text{(H)}$$

worin $Z_1$** und $Z_2$** unabhängig voneinander aus Alkyl, Aryl oder Alkylaryl ausgewählt sein können, wobei mindestens einer oder vorzugsweise zwei dieser Reste durch eine Isocyanatgruppe substituiert sind, wobei Isocyanatgruppen erneut Bestandteil von entsprechenden Allophanat-Typ- oder weiteren gegebenenfalls auch durch Nebenreaktionen entstehenden Strukturen sein können, also pro Molekül der Formel H mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel H verbleiben.

Entsprechende Verbindungen des Typs b1) (wie z.B. HDI-Isocyanurat, die entsprechenden Pentamere, HDI- oder IPDI-Iminooxadiazindione, oder HDI- oder IPDI-Uretdione, Uretonimine oder jeweils höhere Polymere davon) oder b2) (wie z.B. HDI-Biuret oder HDI-Allophanat, oder jeweils höhere Polymere davon) sind bekannt oder nach bekannten Verfahren herstellbar, beispielsweise wie in der EP 0 000 194, der EP 0 531 820, DE 2 616 416, EP 0 010 589, US 3,124,605, US 3,358,010, US 3,644,490, US 3,769,318, US 4,160,080, US 4,177,342, US 5,124,427, US 5,208,334, US 5,235,018 oder dergleichen.

HDI steht für Hexamethylendiisocyanat, IPDI für Isophorondiisocyanat.

In besonderen Ausführungsformen aller Erfindungsverkörperungen sind die cyclischen Strukturen ausgewählt in Variante b1) aus ein oder mehreren aus der Gruppe, die aus Uretdion-Typ-, Iminooxadiazinon-Typ-, Uretonimin-Typ- und Oxazintrion-Typ-Strukturen besteht, ausgewählt, besonders als derartige aliphatische Polyisocyanate, die Polyisocyanate aus b2) aus Biuret- und Allophanat-Typ-Strukturen, besonders als derartige aliphatische Polyisocyanate.

Besondere Auführungsformen aller Erfindungsverkörperungen sind dabei Mischungen von Komponenten b) mit Uretdion- und Biuret-Struktur oder mit Biuret- und Allophanatstruktur oder mit Uretdion- und Allophanatstruktur: Damit sind die aus diesen Edukten hergestellten silanterminierten Harze und Kleb- und Beschichtungsstoffe ebenfalls

bevorzugt bei allen Erfindungsgegenständen.

In besonderen Varianten aller Ausführungsformen der Erfindung handelt es sich bei den mindestens zwei Komponenten b) um Mischungen von $C_1$-$C_{10}$-Methylendiisocyanaten, z. B. Hexamethylendiisocyanat, von denen eines ein oder mehrere zyklische Strukturen (b1)), insbesondere Uretdion-Typ-Strukturen, beinhaltet, das andere ein oder mehrere Biuret- und/oder Allophanat-Strukturen beinhaltet.

Geeignete Ausgangsmaterialien (Vorstufen) für die Komponenten b1) und b2) sind beispielsweise Diisocyanatodiphenylmethan und seine Strukturisomere, Polymeren und Homologen, Toluoldiisocyanat und seine Strukturisomeren, Polymeren und Homologen 1,6-Hexamethylendiisocyanat, 1-Isocyanato-3,3,5-trimethyl-5-isocyanatomethylcyclohexan (Isophorondiisocyanat) und Diisocyanato-dicyclohexylmethan und seine Strukturisomeren, Polymeren und Homologen, sowie deren Mischungen.

Unter Strukturisomeren sind insbesondere Stellungsisomere zu verstehen, unter Polymeren oder Homologen z.B. Präpolymeren auf deren Basis.

Wo die Rede von "weiteren ggf. auch durch Nebenreaktionen entstehenden Strukturen" ist, bezieht sich das auf andere als die jeweils genannten Isocyanat-Reaktionsprodukte, wie unvollständige Reaktionsprodukte oder jeweils aus anderen der genannten Gruppen stammende Strukturen. Derartige Nebenprodukte können oft nicht vermieden werden und können beispielsweise in einem Anteil von bis zu 50, z.B. bis zu 40, Prozent der Zahl aller umgesetzten Isocyanatgruppen vorhanden sein.

Wo die Rede davon ist, dass "Isocyanatgruppen erneut Bestandteil" sein können von Uretdion-, Isocyanurat-, Iminooxadiazindion-, Uretonimin-, Oxadiazintrion-, Biuret-, Allophanat- oder CarbodiimidTyp-Strukturen oder weiteren gegebenenfalls durch Nebenreaktionen entstehenden Strukturen bedeutet dies, dass die Isocyanatgruppen in nach entsprechender Reaktion abgewandelter Form vorliegen können (dann also nicht mehr als Isocyanatgruppen als solche).

Bei den unter b3) fallenden Präpolymeren mit einer Viskosität von 60'000 oder weniger mPa·s, herstellbar aus der Reaktion von b1) und/oder b2) mit Verbindungen mit mindestens 2 gegenüber Isocyanaten reaktiven Gruppen, handelt es sich um entsprechende Präpolymere, die durch Umsetzung unter zur Herstellung von Präpolymeren aus den Isocyanaten als solchen üblichen Bedingungen herstellbar sind.

Entsprechende Verbindungen mit mindestens zwei gegenüber Isocyanaten reaktiven Gruppen sind insbesondere di- oder höherfunktionale (vorzugsweise aliphatische, aromatische oder araliphatische) Verbindungen mit zwei oder mehr Gruppen ausgewählt aus Amino, Imino, Hydroxy und Mercapto, beispielsweise entsprechende Alkohole, Thiole, Amine, Thioalkoho-le, Aminoalkohole oder Aminothiole, oder Gemische davon, beispielsweise wie in WO 02/079341 und WO 02/079293 genannt, welche hier diesbezüglich durch Bezugnahme aufgenommen werden. Beispiele für derartige Verbindungen sind Folgeprodukte des Ethylen- oder Propylenoxids, wie Ethandiol, andere Diole, wie Butandiol, Bisphenol A oder Bisphenol F, höherwertige Alkohole, wie z.B. Glycerin oder Trimethylolpropan, hydroxylgruppenhaltige Polyether, z.B. Polyethylenoxid, Polypropylenoxid, oder Polytetrahydrofuran, Polyether mit jeweils endständigem Hydroxy, die in der Hauptkette aromatische Struktureinheiten enthalten, hydroxylgruppenhaltige Polyester, oder insbesondere Polyether mit jeweils endständigem Amino ("Jeff-Amine" = Polyoxyalkylenamine, was zur Entstehung entsprechender Harnstoffderivate führt), aliphatische Aminole, insbesondere Hydroxyniederalkylamine, wie Ethanolamin, Diethanolamin oder 3-Aminopropanol, oder aromatische Aminole, wie 2-, 3- oder 4-Aminophenol, anorganische oder organische Aminoverbindungen mit 2 oder mehr Aminogruppen, wie Hydrazin oder Ethylendiamin oder insbesondere sterisch gehinderte, sekundäre aliphatische Diamine wie N,N'-Di-tert.-butylethylendiamin , oder aromatische Di- oder Polyamine, wie 2,4- und 2,6-Toluoldiamin oder 4,4'-Diaminodiphenylmethan, Polyetherdiamine oder Polyphenyl/Polymethylen-polyamine, die durch Kondensation von Anilinen mit Formaldehyd erhältlich sind, oder insbesondere sterisch gehinderte aromatische Diamine (wie Ethacure® (Albemarle Corp., Baton Rouge, Louisiana, USA) oder Lonzacure® (Lonza Group Ltd., Basel, Schweiz) oder sterisch gehinderte, sekundäre aromatische Diamine (wie Unilink®, UOP, Des Plaines, Illinois, USA). Es können auch Mischungen von zwei oder mehr der genannten jeweils di- oder höherfunktionalen Alkohole, oder insbesondere Aminoalkohole oder Amine vorliegen, oder Thioanaloge (mit Mercaptogruppen statt Amino und/oder Hydroxy) der genannten Verbindungen.

Bevorzugt sind solche der genannten Präpolymeren, bei deren Herstellung außer Polyethern als im letzten Absatz genannte Verbindungen mit mindestens zwei gegenüber Isocyanaten reaktiven Gruppen mindestens eine der anderen in diesem Absatz genannten Verbindungen mit solchen reaktiven Gruppen beinhalten, insbesondere Präpolymeren, bei deren Herstellung keine Polyether verwendet wurden, oder solche, bei denen mindestens auch (zu Harnstoffen führende) ein oder mehrere Aminogruppen tragen. Dies ermöglicht eine besonders geringe Verformbarkeit, die für festes Kleben vorteilhaft ist. Auch die entsprechenden erfindungsgemäßen Verfahren und Verwendungen stellen besondere Ausführungsformen der Erfindung dar.

Aliphatische (bevorzugt), aromatische oder araliphatische Polyisocyanate mit den oben definierten cyklischen Strukturen und aliphatische (bevorzugt), aromatische oder araliphatische Polyisocyanate mit Biuret-, Allophanat- oder ferner Carbodiimid-Strukturen (acyclische Strukturen) können in der vorliegenden Offenbarung auch als Verbindungen mit Isocyanat-gruppen in abgewandelter Form bezeichnet werden.

In bevorzugten Ausführungsformen der Erfindungsgegenstände handelt es sich bei den Komponenten b) um

solche mit einer (als freie Isocyanatgruppen ausgedrückten) Funktionalität von größer als 2, z.B. von 2.05 oder größer oder 2,1 oder größer. Der Gehalt an freien monomeren Isocyanaten in den Komponenten b) liegt insbesondere bei 0,5 Gew.-% oder weniger, vorzugsweise bei 0,1 Gew.-% oder weniger.

Unter einem Klebstoff ist im Rahmen der vorliegenden Offenbarung ein Material zu verstehen, das nach dem Aushärten das stoffschlüssige Verbinden von Oberflächen von Objekten ermöglicht, sei des innerhalb eines Objekts oder vorzugsweise zum Verbinden von zwei Objekten.

"Auf Basis" bedeutet, dass die erfindungsgemäßen Kleb- und Beschichtungsstoffe neben den genannten Komponenten a) und b) auch weitere übliche Inhaltsstoffe (Zusätze oder Zusatzstoffe) beinhalten können, wie Silan-Vernetzer, Ester der Polykieselsäure (wie z.B. Dynasilan 40), Haftvermittler, wie z.B. Aminosilane, hydrophobe Haftharze, wie z.B. phenolmodifiziertes Kohlenwasserstoffharz, Thixotropiermittel, wie pyrogene Kieselsäure, Pigmente, Farbstoffe, Hilfsstoffe, Lösemittel wie z.B. Aceton, Ethanol oder Toluol, Phthalsäureester oder Paraffine, Stabilisatoren (z.B. gegen Oxidation, UV-Licht oder Licht), Antistatikmittel, Verdickungsmittel oder dergleichen Additive enthalten, oder Gemische von zwei oder mehr davon, vorzugsweise (insbesondere bei primären oder sekundären Aminosilanen oder Mercaptosilanen und Biureten oder Isocyanuraten als Edukten) ohne Tenside. Diese weiteren Inhaltsstoffe können beispielsweise in einer Menge von insgesamt bis zu 80, vorzugsweise zwischen 0,01 und 50 Gew.-%, vorliegen.

In besonderen Ausführungsformen der Erfindungsgegenstände beinhalten die erfindungsgemäßen silanterminierten Harze insbesondere hydrophobe Haftharze, wie z.B. phenolmodifiziertes Kohlenwasserstoffharz, z.B. in den im vorstehenden Absatz genannten Mengen.

Als Katalysator können übliche Katalysatoren in dem Fachmann bekannter Menge zugesetzt werden, wie z.B. Blei, Kobalt-, Eisen, Nickel, Zink- oder weniger bevorzugt Zinnsalze von organischen Carboxylsäuren, wie Fettsäuren, wie Zinnoctanoat, Zinnaphthenat oder Zinn-Acetat, Zinnalkoxylate oder Dialkylzinn-Dicarboxylate, wie Dibutylzinn-dilaurat, Dibutylzinndipalmitat, Dibutylzinn-distearat, Dibutylzinn-diacetat oder Dibutylzinnacetylacetonat, Titansäureester, wie Tetrabutyltitanat oder Tetrapropyltitanat, oder vorzugsweise (beispielsweise sekundäre oder tertäre) Amine, wie Ethylamine, Morpholin, n-Methylmorpholin, 2-Ethyl-2-Methylimidazol, 1,8-Diazabicyclo(5.4.0)undecen-7 (besonders bevorzugt), Pyridin, Carboxylsäuresalze solcher Amine oder langkettige aliphatische Amine; oder Gemische von zwei oder mehr davon, wobei die Gesamtmenge an Katalysator, bezogen auf den fertigen Klebstoff, beispielsweise bei 0,001 bis 5 Gew.-% liegen kann, z.B. bei 0,005 bis 0,5 Gew.-%.

Als weitere Zusätze kommen insbesondere Füllstoffe zum Einsatz, vorzugsweise mineralische oder mineralähnliche Füllstoffe, wie Quarz, Glas, Porzellan, Korund, Keramik, Talkum, Kieselsäure (z.B. pyrogene Kieselsäure), Silikate, Ton, Titandioxid, Kreide, Schwerspat, Feldspat, Basalt, Aluminiumhydroxid, Granit oder Sandstein, polymere Füllstoffe, hydraulisch härtbare Füllstoffe, wie Gips, Branntkalk oder Zement (z.B. Tonerd- oder Portlandzement), aktive Aluminiumhydroxide, Metalle, wie Aluminium, Ruß, ferner Holz, mineralische oder organische Fasern, oder dergleichen, oder Gemische von zwei oder mehr davon. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform, und die entsprechenden Grundteilchen haben vorzugsweise einen maximalen Durchmesser von 0,001 $\mu$m bis 10 mm. Füllstoffe liegen bezogen auf die fertige Mischung (Klebstoff) vorzugsweise in einer Menge von bis zu 90, insbesondere 3 bis 85, beispielsweise 5 bis 70 Gew.-% vor.

Die Herstellung eines erfindungsgemäßen Beschichtungs- oder insbesondere Klebstoffes (für Referenzzwecke offenbart) erfolgt vorzugsweise durch Umsetzung der Komponenten a) und b) nach Vermischen der Komponenten, erforderlichenfalls in Gegenwart eines Lösungsmittels ohne aktiven Wasserstoff (wie z.B. in SH-, NH- oder -OH-Gruppen), vorzugsweise jedoch ohne Lösungsmittel, bei üblichen Temperaturen beispielsweise im Bereich zwischen 0 °C und der durch die Reaktionswärme entstehenden Temperatur, beispielsweise zwischen 20 und 150 °C oder gegebenenfalls bei höheren Temperaturen durch Erwärmen gegebenenfalls unter gleichzeitiger oder vorzugsweise anschließender Vermischung mit ein oder mehreren weiteren Inhaltsstoffen. Eventuell kann ein Katalysatorzusatz zur ausreichenden Beschleunigung der Reaktion erfolgen, wobei die Aktivierung beispielsweise mit einem oder mehreren der oben genannten Katalysatoren erfolgen kann.

Vorzugsweise liegt dabei das molare Verhältnis der miteinander umzusetzenden funktionellen Gruppen (z.B. X in Formel I) des Silans (Komponente a)) zu denen der Isocyanatderivate (Isocyanatgruppen) (Komponente b)) im Bereich von 1 : 5 bis 5 : 1, besonders bevorzugt im Bereich von 1:2 bis 2:1. Überschüssiges Silan kann dabei als Reaktivverdünner und/oder Vernetzer in der endgültigen Zusammensetzung dienen. Überschüssige Isocyanat-Gruppen können der Haftvermittlung oder der Erzeugung von Schaumstrukturen dienen.

Das derart erhältliche Produkt ist (soweit unter die Ansprüche fallend) ein erfindungsgemäßer Kleb- oder Beschichtungsstoff.

In einer möglichen bevorzugten Ausführungsform können die erfindungsgemäßen Klebstoffe als Ein-Komponenten-Kleber vorgesehen sein und somit auch als solche verwendet werden - die Aushärtung erfolgt dann vor allem durch die Umgebungsfeuchtigkeit (z.B. aus Luft und/oder den zu verklebenden Materialien).

Alternativ ist die Ausführung als Zwei-Komponenten-System möglich, insbesondere derart, dass Wasser und Silane in getrennten Komponenten vorliegen, wobei vorzugsweise die erste Komponente den Klebstoff (beispielsweise

zusammengesetzt wie für ein einkomponentiges System), die zweite Komponente Wasser, insbesondere in Pasten- oder Gelform (beispielsweise gebunden an einen Binder, wie Kieselgel oder dergleichen) gebunden, enthalten kann, das dann die Aushärtung ermöglicht.

Bei Zweikomponentensystemen können die beiden Komponenten Klebstoff und Wasser (insbesondere in Pasten- oder Gelform) in getrennten Behältnissen eines Gebindes vorhanden sein und (beispielsweise durch Rühren) miteinander verbunden werden, oder vorzugsweise in einer Zwei-Kammer-Kartusche oder einer entsprechenden Vorrichtung, die vorteilhaft mit einem Statikmischer ausgestattet sein kann, so dass die Vermischung direkt vor Ort erfolgt und die Aushärtung damit beginnt.

Die Erfindung betrifft auch die Verwendung der erfindungsgemäßen Klebstoffe beim Verkleben insbesondere im Konstruktions- oder Baubereich zur (mindestens) stoffschlüssigen Verbindung von zwei oder mehr in Kontakt bringbaren Flächen eines Teils und/oder von zwei oder mehr Teilen zu einem aus den verbundenen Teilen bestehenden Objekt.

Zum Konstruktionsbereich gehört beispielsweise der Einsatz zum Verkleben im Bereich der Herstellung von Land-, Wasser- oder Luftfahrzeugen, wie in der Automobilindustrie, im Bereich des Sanitärwesens, im Bereich der Elektroindustrie, im Bereich der Herstellung von Produkten mit Kunststoffteilen, in der Möbelindustrie und vielen anderen Bereichen.

Im Baubereich gehört beispielsweise der Einsatz zum Verkleben von Böden, Rohren, Platten, Steinen, Holzbauteilen (hier ist die Realisierbarkeit der Belastungsgruppe D4 nach DIN EN 204 mit erfindungsgemäßen Klebstoffen hervorzuheben) und dergleichen (beispielsweise zur Befestigung von Platten an Fassaden oder dergleichen) zu den erfindungsgemäßen Verwendungen.

Bei der Verwendung wird vorzugsweise jeweils eine Oberfläche eines zu behandelnden (verklebenden) Objekts mindestens teilweise mit dem Klebstoff beaufschlagt und dann mit einer anderen Oberfläche (die auch mit erfindungsgemäßem Klebstoff beaufschlagt sein kann) desselben oder eine anderen Objektes in Verbindung gebracht. Nach dem Aushärten (durch Luftfeuchtigkeit, Feuchtigkeit in den Objekten und/oder zugesetztes Wasser (letzteres insbesondere im Fall eines Zwei-Komponenten-Systems), sind die Oberflächen mindestens stoffschlüssig miteinander verbunden (daneben können andere Verbindungsmechanismen wie Form- und/oder Kraftschluss an der Verbindung beteiligt sein).

Bevorzugte Ausführungsformen der Erfindung finden sich in den Beispielen, wie auch in den Ansprüchen (insbesondere den Unteransprüchen), die hier durch Bezugnahme aufgenommen werden, wobei ebenfalls die oben genannten Definitionen zur Präzisierung von ein oder mehreren der in den Ansprüchen genannten Merkmalen dienen können, was zu weiteren Ausführungsformen der Erfindung führt.

Die nachfolgenden Beispiele dienen der Illustration der Erfindung, ohne ihren Umfang einzuschränken.

**Vergleichsbeispiel mit nur Biuret-Isocvanatderivat als Edukt:**

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Palatinol 10-P | BASF SE[2] | Weichmacher (Bis(2-propylheptyl)phthalat) |
| Calcilit® 6 HS | Alpha Calcit[3] | Kreide (Füllstoff) |
| PC-CAT-DBU | Performance Chemicals[4] | Katalysator (Diazabicycloundecene) |

Herstellung des Präpolymers:

Dynasylan 1505 und Vestanat HB 2540 LV werden zur Herstellung eines silanterminierten Präpolymers unter Zugabe von 10 % Weichmacher umgesetzt. Es wird ein Präpolymer mit einem Verhältnis der funktionellen Gruppen des Isocyanats (Isocyanat-Äquivalente) zu denen des Aminosilans (Amino-Äquivalente) von 1:1,1 hergestellt. Dazu werden 6,14 g Weichmacher vorgelegt und anschließend 31,38 g Dynasylan 1505 eingewogen. Im Anschluss werden 30 g Vestanat HB 2640 LV derart zugegeben und untergerührt, dass die Temperatur kontrolliert werden kann.

Herstellung des Konstruktionsklebstoffes

Das Präpolymer wird mit 40 Gew.-% Kreide gemischt. Danach werden 0,01 Gew.-% PC-CAT-DBU Katalysator

zugegeben.

Die Zugscherfestigkeit des Klebstoffs wird nach DIN EN 204 auf Buche bestimmt. Man erhält nach Lagerungsfolge 1 einen Durchschnittswert von 10,1 MPa. Nach Lagerungsfolge 3 und 5 erhält man jeweils einen Durchschnittswert von 4 MPa.

Beispiel 1:

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Desmodur® N3400 | Bayer Material Science[5] | Hexamethylen-1,6-diisocyanat, mit Uretdion-Strukturen |
| Calcilit® 6 HS | Alpha Calcit[3] | Kreide (Füllstoff) |
| PC-CAT-DBU | Performance Chemicals[4] | Katalysator (Diazabicycloundecene) |

Herstellung des Präpolymers:

Zur Herstellung des Präpolymers werden 56,7 g Dynasylan 1505 vorgelegt. Es werden 5,0 g Desmodur N3400 und 45,0 g Vestanat HB 2540 LV im Verhältnis 10:90 Gewichtsteile zugegeben und untergerührt. Damit wird ein Präpolymer mit einem Verhältnis der funktionellen Gruppen des Isocyanats (Isocyanat-Äquivalente) zu denen des Aminosilans (Amino-Äquivalente) von 1:1 hergestellt.

Herstellung des Konstruktionsklebstoffes

Das Präpolymer wird mit 40 Gew.-% Kreide gemischt. Danach werden 0,01 Gew.-% PC-CAT-DBU Katalysator zugegeben und eingerührt.

Die Zugscherfestigkeit des Klebstoffs wird nach DIN EN 204 auf Buche bestimmt. Man erhält nach Lagerungsfolge 1 einen Durchschnittswert von 11,6 MPa. Nach Lagerungsfolge 3 erhält man durchschnittlich 5,2 MPa und nach Lagerungsfolge 5 erhält man einen Durchschnittswert von 5,9 MPa.

Beispiel 2:

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Desmodur® N3400 | Bayer Material Science[5] | Hexamethylen-1,6-diisocyanat, mit Uretdion-Strukturen |
| Novares LA1200 | RÜTGERS Chemicals AG | Phenolmodifiziertes Kohlenwasserstoffharz |
| Calcilit® 6 HS | Alpha Calcit[3] | Kreide (Füllstoff) |
| PC-CAT-DBU | Performance Chemicals[4] | Katalysator (Diazabicycloundecene) |

Herstellung des Präpolymers:

Zur Herstellung des Präpolymers werden 56,7 g Dynasylan 1505 vorgelegt. Es werden 5,0 g Desmodur N3400 und 45,0 g Vestanat HB 2540 LV im Verhältnis 10:90 Gewichtsteile zugegeben und untergerührt. Damit wird ein Präpolymer mit einem Verhältnis der funktionellen Gruppen des Isocyanats (Isocyanat-Äquivalente) zu denen des Aminosilans (Amino-Äquivalente) von 1:1 hergestellt.

Herstellung des Konstruktionsklebstoffes

Das Präpolymer wird mit 5 Gew.-% Novares LA 1200 und anschließend mit 40 Gew.-% Kreide gemischt. Danach werden 0,01 Gew.-% PC-CAT-DBU Katalysator zugegeben und eingerührt.
Die Zugscherfestigkeit des Klebstoffs wird nach DIN EN 204 auf Buche bestimmt. Man erhält nach Lagerungsfolge 1 einen Durchschnittswert von 11,4 MPa. Nach Lagerungsfolge 3 erhält man durchschnittlich 6,4 MPa und nach Lagerungsfolge 5 erhält man einen Durchschnittswert von 6,5 MPa.

Beispiel 3:

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Desmodur® N3400 | Bayer Material Science[5] | Hexamethylen-1,6-diisocyanat, mit Uretdion-Strukturen |
| Dynasylan® 1146 | Evonik Industries[1] | Alkylpolysiloxane, Aminoalkylgruppen modifiziert |
| Calcilit® 6 HS | Alpha Calcit[3] | Kreide (Füllstoff) |
| PC-CAT-DBU | Performance Chemicals[4] | Katalysator (Diazabicycloundecene) |

Herstellung des Präpolymers:

Zur Herstellung des Präpolymers werden 56,7 g Dynasylan 1505 vorgelegt. Es werden 5,0 g Desmodur N3400 und 45,0 g Vestanat HB 2540 LV im Verhältnis 10:90 Gewichtsteile zugegeben und untergerührt. Damit wird ein Präpolymer mit einem Verhältnis der funktionellen Gruppen des Isocyanats (Isocyanat-Äquivalente) zu denen des Aminosilans (Amino-Äquivalente) von 1:1 hergestellt.

Herstellung des Konstruktionsklebstoffes

Das Präpolymer wird mit 1 Gew.-% Dynasylan 1146 und anschließend mit 40 Gew.-% Kreide gemischt. Danach werden 0,01 Gew.-% PC-CAT-DBU Katalysator zugegeben und eingerührt.
Die Zugscherfestigkeit des Klebstoffs wird nach DIN EN 204 auf Buche bestimmt. Man erhält nach Lagerungsfolge 1 einen Durchschnittswert von 11,2 MPa. Nach Lagerungsfolge 3 erhält man durchschnittlich 6,4 MPa und nach Lagerungsfolge 5 erhält man einen Durchschnittswert von 5,4 MPa.

Beispiel 4:

Es wird ein Konstruktionsklebstoff aus einem silanterminierten Präpolymeren und weiteren Zusätzen hergestellt.

Eingesetzte Materialien:

| | | |
|---|---|---|
| Dynasylan® 1505 | Evonik Industries[1] | 3-(Diethoxymethylsilyl)propylamin |
| Vestanat® HB 2640 LV | Evonik Industries[1] | Hexamethylen-1,6-diisocyanat, mit Biuret-Strukturen |
| Desmodur® XP2580 | Bayer Material Science[5] | Hexamethylen-1,6-diisocyanat, mit Allophanat-Strukturen |
| Calcilit® 6 HS | Alpha Calcit[3] | Kreide (Füllstoff) |
| PC-CAT-DBU | Performance Chemicals[4] | Katalysator (Diazabicycloundecene) |

Herstellung des Präpolymers:

Zur Herstellung des Präpolymers werden 48,8 g Dynasylan 1505 vorgelegt. Es werden 25,0 g Desmodur XP2580 und 25,0 g Vestanat HB 2540 LV im Verhältnis 50:50 Gewichtsteile zugegeben und untergerührt. Damit wird

ein Präpolymer mit einem Verhältnis der funktionellen Gruppen des Isocyanats (Isocyanat-Äquivalente) zu denen des Aminosilans (Amino-Äquivalente) von 1:1 hergestellt.

Herstellung des Konstruktionsklebstoffes

Das Präpolymer wird mit 40 Gew.-% Kreide gemischt. Danach werden 0,01 Gew.-% PC-CAT-DBU Katalysator zugegeben und eingerührt.

Die Zugscherfestigkeit des Klebstoffs wird nach DIN EN 204 auf Buche bestimmt. Man erhält nach Lagerungsfolge 1 einen Durchschnittswert von 10,9 MPa. Nach Lagerungsfolge 3 erhält man durchschnittlich 4,6 MPa und nach Lagerungsfolge 5 erhält man einen Durchschnittswert von 4,2 MPa.

## Patentansprüche

1. Silanterminiertes Harz für Kleb- oder Beschichtungsstoff, insbesondere für Konstruktionszwecke, beinhaltend silanterminierte Polymere aus Isocyanaten, die bei der Umsetzung von als erster Komponente

   a) ein oder mehreren Silanen, die mindestens einen hydrolysierbaren Alkoxyrest und mindestens eine Amino-, sek.-Amino und/oder Mercaptogruppe tragen;

   und mindestens zwei weiteren Komponenten b) ausgewählt aus

   b1) aliphatischen, aromatischen oder araliphatischen Polyisocyanaten mit durch Reaktion von Isocyanatgruppen miteinander gebildeten cyklischen Uretdion-Typ-, Isocyanurat-Typ-, Iminooxadiazinon-Typ-, Uretonimin-Typ- oder Oxadiazintrion-Typ-Strukturen und einer Viskosität von höchstens 15000 mPa·s bei 23 °C;
   b2) aliphatischen (bevorzugt), aromatischen oder araliphatischen Polyisocyanaten mit Biuret-, Allophanat- oder Carbodiimid-Typ-Strukturen und einer Viskosität von höchstens 15000 mPa·s bei 23 °C; und
   b3) Präpolymeren mit einer Viskosität von 60’000 oder weniger mPa·s bei 23 °C, herstellbar aus der Reaktion von b1) und/oder b2) mit Verbindungen mit mindestens 2 gegenüber Isocyanaten reaktiven Gruppen

   erhältlich sind,
   und wobei erwähnte Viskositäten mit einem Brookfield DV-III+-Viskosimeter mit Spindel 3 bei 10 Umdrehungen/Minute bei 23 °C gemäß DIN EN ISO 2555 gemessen werden.

2. Silanterminiertes Harz nach Anspruch 1, wobei das Silan ein bis drei hydrolysierbare Alkoxyreste aufweist.

3. Silanterminiertes Harz nach einem der Ansprüche 1 oder 2, wobei die Komponenten in den Varianten b1 oder b2 jeweils eine Viskosität < 5000 mPas, in Variante b3 eine Viskosität <15000 mPas haben.

4. Silanterminiertes Harz nach einem der Ansprüche 1 oder 2, **dadurch gekennzeichnet, dass** es einen Gehalt an freien Isocyanatgruppen von 10 Gew.-% oder weniger aufweist.

5. Silanterminiertes Harz nach Anspruch 4, **dadurch gekennzeichnet, dass** der Gehalt an freien Isocyanatgruppen bei 0,5 Gew.-% oder weniger liegt.

6. Silanterminiertes Harz nach einem der Ansprüche 1 bis 5, **dadurch gekennzeichnet, dass** unter dem oder den Silanen für Komponente a) ein oder mehrere - wobei [b] jeweils für eine ganze Zahl von 2 oder höher steht - ausgewählt aus [b]-Aminoalkyl-cycloalkyl-dialkoxysilanen und [b]-Aminoalkyl-alkyl-dialkoxysilanen zu verstehen ist oder sind.

7. Silanterminiertes Harz nach einem der Ansprüche 1 bis 6, **dadurch gekennzeichnet, dass** als Komponente oder Komponenten b) zwei bis 6 der folgenden vorgesehen sind:

   b1*) aliphatische, aromatische oder araliphatische Polyisocyanate mit durch Reaktion von Isocyanatgruppen miteinander gebildeten cyklischen Uretdion-Typ-, Isocyanurat-Typ-, Iminooxadiazinon-Typ- oder Uretonimin-Typ-Strukturen, insbesondere Uretdion-Typ- oder Uretonimin-Strukturen, einer Viskosität von höchstens 5000 mPa·s bei 23 °C und einem Gehalt an freien monomeren Isocyanaten von 0,5 oder weniger Gewichtsprozent;
   b2*) aliphatische, aromatische oder araliphatische Polyisocyanate mit Biuret-, Allophanat- oder Carbodiimid-Typ-Strukturen, insbesondere Biuret- oder Allophanat-Typ-Strukturen, einer Viskosität von höchstens 5000 mPa·s bei 23 °C und einem Gehalt an freien monomeren Isocyanaten von 0,5 oder weniger Gewichtsprozent; und/oder

b3*) Präpolymeren mit einer Viskosität von 15'000 oder weniger mPa·s, herstellbar aus der Reaktion von b1*) und/oder b2*) mit Verbindungen mit mindestens 2 gegenüber Isocyanaten reaktiven Gruppen.

**8.** Silanterminiertes Harz nach einem der Ansprüche 1 bis 7, **dadurch gekennzeichnet, dass** als Komponente b) zwei oder mehrere ausgewählt aus

b1**) aliphatischen Polyisocyanaten mit cyclischen Strukturen ausgewählt aus solchen des Uretdion-Typs

b2**) aliphatischen Polyiisocyanaten ausgewählt aus solchen mit Biuret-, Allophanatstruktur und/oder Carbodiimid-Struktur; und

b3**) Präpolymeren mit einer Viskosität von 15'000 oder weniger mPa·s, herstellbar aus der Reaktion von b1**) und/oder b2**) mit Verbindungen mit mindestens 2 gegenüber Isocyanaten reaktiven Gruppen ausgewählt aus Amino, Imino, Hydroxy und Mercapto, insbesondere zwei oder mehr ausgewählt aus entsprechenden Alkoholen, Thiolen, Aminen, Thioalkoho-len, Aminoalkoholen und Aminothiolen

beinhaltet sind.

**9.** Klebe- oder Beschichtungsmittel, beinhaltend ein silanterminiertes Harz nach einem der Ansprüche 1 bis 8, und weiter beinhaltend ein oder mehrere übliche Zusätze, insbesondere ausgewählt aus Silan-Vernetzern, Estern der Polykieselsäure, Haftvermittlern, Thixotropiermitteln, Pigmenten, Farbstoffen, anderen Hilfsstoffen, Lösemitteln, Stabilisatoren, Antistatikmitteln, Verdickungsmitteln, Füllstoffen und Katalysatoren.

**10.** Kleb- oder Beschichtungsstoff nach Anspruch 9, ausgeführt in Form eines wasserfreien Ein-Komponenten-Kleb- oder Beschichtungsstoffes.

**11.** Kleb- oder Beschichtungstoff nach einem der Ansprüche 9 oder 10, ausgeführt in Form eines Zwei-Komponenten-Kleb- oder Beschichtungsstoffes, dessen eine Komponente ein Harz nach einem der Ansprüche 1 bis 11 beinhaltet, dessen andere Komponente Wasser in freier oder in Pasten- oder Gelform ist.

**12.** Verwendung eines Klebstoffes nach einem der Ansprüche 9 bis 11 zum Verkleben insbesondere im Konstruktions- und Baubereich zur mindestens stoffschlüssigen Verbindung von zwei oder mehr in Kontakt bringbaren Flächen eines Teils und/oder von zwei oder mehr Teilen zu einem aus den verbundenen Teilen bestehenden Objekt, bei der jeweils eine Oberfläche eines zu behandelnden Objekts mindestens teilweise mit dem Klebstoff beaufschlagt wird und dann mit einer anderen Oberfläche, die gegebenenfalls auch mit dem Klebstoff beaufschlagt sein kann, desselben oder eines anderen Objekts in Verbindung gebracht wird.

**13.** Verwendung eines Beschichtungsmittels nach einem der Ansprüche 7 bis 9 zur Beschichtung von Substraten.

**14.** Verwendung nach Anspruch 12 zum Verkleben oder nach Anspruch 13 zum Beschichten im Bereich der Herstellung von Land-, Wasser- oder Luftfahrzeugen, im Bereich des Sanitärwesens, im Bereich der Elektroindustrie, im Bereich der Herstellung von Produkten mit Kunststoffteilen, in der Möbelindustrie und/oder in der Bauindustrie, oder zum Verkleben von Böden, Rohren, Platten oder Steinen.

## Claims

**1.** Silane-terminated resin for an adhesive or coating material, especially for construction purposes, including silane-terminated polymers of isocyanates which are obtainable in the reaction of, as first component,

a) one or more silanes which carry at least one hydrolysable alkoxy radical and at least one amino, sec.-amino and/or mercapto group;

and at least two further components b) selected from

b1) aliphatic, aromatic or araliphatic polyisocyanates having cyclic uretdione-type, isocyanurate-type, iminooxadiazinone-type, uretonimine-type or oxadiazinetrone-type structures formed by reaction of isocyanate groups

with one another and a viscosity of at most 15,000 mPa·s at 23°C;
b2) aliphatic (preferred), aromatic or araliphatic polyisocyanates having biuret-type, allophanate-type or carbodiimide-type structures and a viscosity of at most 15,000 mPa·s at 23°C; and
b3) prepolymers having a viscosity of 60,000 mPa·s or less at 23°C, producible from the reaction of b1) and/or b2) with compounds having at least two groups that are reactive towards isocyanates,

and wherein the said viscosities are measured with a Brookfield DV-III+ viscometer using spindle 3 at 10 revolutions/minute at 23°C in accordance with DIN EN ISO 2555.

**2.** Silane-terminated resin according to claim 1, wherein the silane has from one to three hydrolysable alkoxy radicals.

**3.** Silane-terminated resin according to either one of claims 1 and 2, wherein the components in variants b1 or b2 each have a viscosity < 5000 mPa·s, and in variant b3 a viscosity < 15,000 mPa·s.

**4.** Silane-terminated resin according to either one of claims 1 and 2, **characterised in that** it has a content of free isocyanate groups of 10 % by weight or less.

**5.** Silane-terminated resin according to claim 4, **characterised in that** the content of free isocyanate groups is 0.5 % by weight or less.

**6.** Silane-terminated resin according to any one of claims 1 to 5, **characterised in that** the silane(s) for component a) is(are) to be understood as being one or more selected from [b]-aminoalkyl-cycloalkyl-dialkoxysilanes and [b]-aminoalkyl-alkyl-dialkoxysilanes - wherein [b] is in each case an integer of 2 or above.

**7.** Silane-terminated resin according to any one of claims 1 to 6, **characterised in that**, as component or components b), two to six of the following are provided:

b1*) aliphatic, aromatic or araliphatic polyisocyanates having cyclic uretdione-type, isocyanurate-type, iminooxadiazinone-type or uretonimine-type structures formed by reaction of isocyanate groups with one another, especially uretdione-type or uretonimine structures, a viscosity of at most 5000 mPa·s at 23°C and a content of free monomeric isocyanates of 0.5 % by weight or less;
b2*) aliphatic, aromatic or araliphatic polyisocyanates having biuret-type, allophanate-type or carbodiimide-type structures, especially biuret-type or allophanate-type structures, a viscosity of at most 5000 mPa·s at 23°C and a content of free monomeric isocyanates of 0.5 % by weight or less; and/or
b3*) prepolymers having a viscosity of 15,000 mPa·s or less, producible from the reaction of b1*) and/or b2*) with compounds having at least two groups that are reactive towards isocyanates.

**8.** Silane-terminated resin according to any one of claims 1 to 7, **characterised in that**, as component b), it includes two or more selected from

b1**) aliphatic polyisocyanates having cyclic structures selected from those of the uretdione-type,
b2**) aliphatic polyisocyanates selected from those having a biuret structure, allophanate structure and/or carbodiimide structure; and
b3**) prepolymers having a viscosity of 15,000 mPa·s or less, producible from the reaction of b1**) and/or b2**) with compounds having at least two groups that are reactive towards isocyanates selected from amino, imino, hydroxy and mercapto, especially two or more selected from corresponding alcohols, thiols, amines, thioalcohols, aminoalcohols and aminothiols.

**9.** Adhesive or coating composition, including a silane-terminated resin according to any one of claims 1 to 8, and further including one or more customary additives, especially selected from silane crosslinkers, esters of polysilicic acid, adhesion promoters, thixotropic agents, pigments, dyes, other auxiliaries, solvents, stabilisers, antistatic agents, thickening agents, fillers and catalysts.

**10.** Adhesive or coating material according to claim 9, implemented in the form of a non-aqueous single-component adhesive or coating material.

**11.** Adhesive or coating material according to either one of claims 9 and 10, implemented in the form of a two-component adhesive or coating material, one component of which includes a resin according to any one of claims 1 to 11, and

the other component of which is water in free form or in paste or gel form.

**12.** Use of an adhesive according to any one of claims 9 to 11 for adhesive bonding, especially in the construction and building sector, for at least bonded connection of two or more surfaces of a part that are to be brought into contact with one another and/or of two or more parts that are to form an article consisting of the connected parts, wherein in each case the adhesive is applied to at least part of a surface of an article to be treated and that surface is then brought into connection with another surface of the same article or of a different article, to which surface the adhesive can optionally also have been applied.

**13.** Use of a coating composition according to any one of claims 7 to 9 for coating substrates.

**14.** Use according to claim 12 for adhesive bonding or according to claim 13 for coating in the field of the manufacture of land vehicles, watercraft or aircraft, in the sanitation sector, in the electrical industry sector, in the field of the manufacture of products with plastics parts, in the furniture industry and/or in the building industry, or for the adhesive bonding of floors, pipes, panels or stone.

**Revendications**

**1.** Résine terminée par du silane pour matière de collage ou de revêtement, en particulier à des fins de construction, contenant des polymères d'isocyanates terminés par du silane, qui sont obtenus par réaction à partir de, à titre de premier composé

a) un ou plusieurs silanes, qui comportent au moins un résidu alcoxy hydrolysable et au moins un groupement amino, amino secondaire et/ou mercapto ;

et d'au moins deux autres composés b) sélectionnés parmi

b1) des polyisocyanates aliphatiques, aromatiques ou araliphatiques présentant des structures cycliques de type uretdione, de type isocyanurate, de type iminooxadiazinone, de type urétonimine ou de type oxadiazintrione formées par réaction des groupements isocyanates les uns avec les autres et présentant une viscosité d'au maximum 15 000 mPa.s à 23 °C ;
b2) des polyisocyanates aliphatiques (de préférence), aromatiques ou araliphatiques présentant des structures de type biuret, de type allophanate ou de type carbodiimide et présentant une viscosité d'au maximum 15 000 mPa.s à 23 °C ; et
b3) des prépolymères présentant une viscosité de 60 000 mPa.s ou moins à 23 °C, synthétisables par réaction de b1) et/ou b2) avec des composés présentant au moins 2 groupements réactifs vis-à-vis des isocyanates,

et où la viscosité indiquée est mesurée avec un viscosimètre Brookfield DV-III+ à mobile selon une vitesse de rotation de 3 à 10 tours par minute à 23 °C conformément à la norme DIN EN ISO 2555.

**2.** Résine terminée par du silane selon la revendication 1, dans laquelle le silane présente de un à trois résidus alcoxy hydrolysables.

**3.** Résine terminée par du silane selon la revendication 1 ou 2, dans laquelle les composés des variantes b1 ou b2 présentent une viscosité < 5 000 mPa.s et ceux de la variante b3 présentent une viscosité < 15 000 mPa.s.

**4.** Résine terminée par du silane selon la revendication 1 ou 2, **caractérisée en ce qu'**elle présente une teneur en groupements isocyanates libres de 10% en poids ou moins.

**5.** Résine terminée par du silane selon la revendication 4, **caractérisée en ce que** la teneur en groupements isocyanates libres est de 0,5 % en poids ou moins.

**6.** Résine terminée par du silane selon l'une quelconque des revendications 1 à 5, **caractérisée en ce que**, pour le ou les silanes pour le composé a), un ou plusieurs composés est ou sont sélectionnés parmi les [b]-aminoalkyl-cycloalkyl-dialcoxysilanes et les [b]-aminoalkyl-alkyl-dialcoxysilanes (où [b] est toujours un nombre entier égal à 2 ou plus).

**7.** Résine terminée par du silane selon l'une quelconque des revendications 1 à 6, **caractérisée en ce que**, à titre de composé ou de composés b), de deux à six des composés suivants sont prévus :

b1*) des polyisocyanates aliphatiques, aromatiques ou araliphatiques présentant des structures cycliques de type uretdione, de type isocyanurate, de type iminooxadiazinone ou de type urétonimine formées par réaction des groupements isocyanates les uns avec les autres, présentant une viscosité d'au maximum 5 000 mPa.s à 23 °C et une teneur en isocyanates monomères libres de 0,5 % en poids ou moins ;
b2*) des polyisocyanates aliphatiques, aromatiques ou araliphatiques présentant des structures de type biuret, de type allophanate ou de type carbodiimide, en particulier des structures de type biuret ou de type allophanate, présentant une viscosité d'au maximum 5 000 mPa.s à 23 °C et une teneur en isocyanates monomères libres de 0,5 % en poids ou moins ; et/ou
b3*) des prépolymères présentant une viscosité de 15 000 mPa.s ou moins, synthétisables par réaction de b1*) et/ou b2*) avec des composés présentant au moins 2 groupements réactifs vis-à-vis des isocyanates.

**8.** Résine terminée par du silane selon l'une quelconque des revendications 1 à 7, **caractérisée en ce que**, à titre de composé b), deux composés ou plus sélectionnés parmi

b1**) des polyisocyanates aliphatiques présentant des structures cycliques sélectionnées parmi les structures du type uretdione,
b2**) des polyisocyanates aliphatiques sélectionnés parmi les structures de biuret, d'allophanate et/ou de carbodiimide ; et
b3**) des prépolymères présentant une viscosité de 15 000 mPa.s ou moins, synthétisables par réaction de b1**) et/ou b2**) avec des composés présentant au moins 2 groupements réactifs vis-à-vis des isocyanates sélectionnés parmi les groupements amino, imino, hydroxy et mercapto, en particulier deux groupements ou plus sélectionnés parmi les alcools, thiols, amines, thioalcools, aminoalcools et aminothiols correspondants sont contenus.

**9.** Matière de collage ou de revêtement, contenant une résine terminée par du silane selon l'une quelconque des revendications 1 à 8, et comprenant en outre un ou plusieurs ingrédients habituels, en particulier sélectionnés parmi des agents de réticulation de silane, des esters d'acide polysilicique, des liants, des agents thixotropes, des pigments, des colorants, d'autres additifs, des solvants, des stabilisants, des agents antistatiques, des épaississants, des agents de charge et des catalyseurs.

**10.** Matière de collage ou de revêtement selon la revendication 9, réalisée sous la forme d'une matière de collage ou de revêtement à un seul composé anhydre.

**11.** Matière de collage ou de revêtement selon l'une quelconque des revendications 9 et 10, réalisée sous la forme d'une matière de collage ou de revêtement à deux composés, dont un composé comprend une résine selon l'une quelconque des revendications 1 à 11, et l'autre composé est l'eau sous une forme libre ou dans une pâte ou un gel.

**12.** Utilisation d'une matière de collage selon l'une quelconque des revendications 9 à 11 à des fins de collage en particulier dans le secteur du bâtiment et de la construction pour au moins relier par liaison de matière deux surfaces pouvant être amenées en contact ou plus d'une partie et/ou de deux parties ou plus pour former un objet composé des parties à relier, où une première surface d'un objet à traiter est au moins en partie enduite de matière de collage et est amenée en liaison avec une autre surface du même objet ou d'un autre objet, qui peut également être enduite de matière de collage.

**13.** Utilisation d'une matière de revêtement selon l'une quelconque des revendications 7 à 9 afin de revêtir un substrat.

**14.** Utilisation selon la revendication 12 à des fins de collage ou selon la revendication 13 à des fins de revêtement dans le secteur de la fabrication de véhicules terrestres, de bateaux ou d'avions, dans le secteur des articles sanitaires, dans le secteur de l'industrie électronique, dans le secteur de la fabrication de produits comportant des parties en plastique, dans l'industrie du meuble et/ou dans l'industrie du bâtiment, ou pour coller des planchers, des tuyaux, des plaques ou des pierres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008021221
- DE 102004022150
- DE 602004012439 T2
- US 20090053411 A
- EP 2014692 A
- WO 03054049 A
- DE 102007013262
- WO 2008043722 A
- EP 0913402 A
- EP 0000194 A
- EP 0531820 A
- DE 2616416
- EP 0010589 A
- US 3124605 A
- US 3358010 A
- US 3644490 A
- US 3769318 A
- US 4160080 A
- US 4177342 A
- US 5124427 A
- US 5208334 A
- US 5235018 A
- WO 02079341 A
- WO 02079293 A


### In der Beschreibung aufgeführte Nicht-Patentliteratur


- **SIGGIA, S. ; J. G. HANNA.** *Anal. Chem.,* 1948, vol. 20, 1084